# EUROPEAN PATENT SPECIFICATION

(11) **EP 2 916 603 B1**
(45) Date of publication and mention of the grant of the patent: **25.10.2017**
(21) Application number: 13860943.3
(22) Date of filing: 28.10.2013
(51) Int. Cl.: H04W 56/00

(54) **METHOD AND SYSTEM FOR IMPLEMENTING RACH SYNCHRONISM**
VERFAHREN UND SYSTEM ZUR IMPLEMENTIERUNG VON RACH-SYNCHRONISMUS
PROCÉDÉ ET SYSTÈME DE MISE EN OEUVRE DE SYNCHRONISME RACH

(30) Priority: 04.12.2012 CN 201210512410
(43) Date of publication of application: 09.09.2015
(73) Proprietor: ZTE Corporation, Shenzhen, Guangdong 518057 (CN)
(72) Inventor: LI, Meijuan, Shenzhen Guangdong 518057 (CN)
(74) Representative: D'Halleweyn, Nele Veerle Trees Gertrudis
(86) International application number: PCT/CN2013/086074
(87) International publication number: WO 2014/086214

(56) References cited:
- EP-A1- 2 427 018
- CN-A- 1 394 094
- CN-A- 102 511 189
- CN-A- 102 511 189
- CN-A- 102 710 398
- US-A1- 2011 128 873
- ALCATEL-LUCENT ET AL: "Analysis of impact of cell range extension", 3GPP DRAFT; R1-093762, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388283, [retrieved on 2009-10-17]

## Description

### Technical Field

The present invention relates to the field of wireless communication technology, and in particular, to a method and system for implementing Random Access Channel (RACH) synchronization.

### Background of the Related Art

In the Long Term Evolution (LTE) system, the Time Advance (TA) is a parameter representing a timing offset of an evolved NodeB (eNB) receiving data transmitted by a User Equipment (UE). Initial timing is calculated based on a preamble sequence (Preamble). The physical layer of the eNB measures the TA for initial timing according to the received Preamble which is transmitted by the UE, then the physical layer of the eNB reports the measured TA for initial timing to a Medium Access Control (MAC) layer, and the MAC of the eNB generates a Timing Advance Command (TAC). The TAC is issued by the eNB to the UE through a MAC Random Access Responses (RAR) message, and the UE acquires its own initial timing through authentication of a Random Access Preamble Identity (RAP ID). The TAC totally occupies 11 bits in the MAC RAR message, and a current range of values is 0, 1, 2, ... , 1282, and the unit is 16Ts wherein Ts is the basic time unit of the LTE and 1Ts=[1/(15000x2048)]s.

It can be known from the above description that the current maximum value of the TA for the initial timing of the UE is 1282, and the unit is 16Ts. A covering radius of a cell corresponding to the situation is up to 100km, but for the scenario where the covering radius of the cell is required to be greater than 100km, 1282 cannot meet the requirements. It can be known from the structure of the MAC RAR message that the TAC occupies 11 bits, which can represent the maximum binary number of the TA being 2047, and the unit is 16Ts (equals to 0.52ms). At this time, the corresponding radius of the cell is 160km, which still cannot meet the covering scenario where the radius of the cell is greater than 160km. An example of related art is disclosed in CN102 511 189.

### Summary of the Invention

The embodiments of the present invention provide a method and system for implementing RACH synchronization, to solve the problem in the related art that RACH synchronization cannot be implemented in a condition that the eNB covering range is large.

The embodiments of the present invention provide a method for implementing Random Access Channel (RACH) synchronization, comprising:
when a User Equipment (UE) transmits a preamble sequence for random access to an evolved NodeB (eNB), the eNB calculating a timing advance for initial timing based on the preamble sequence, wherein the unit of the timing advance is 16Ts and Ts=[1/(15000×2048)] seconds;
when an eNB covering radius required by the application scenario is greater than 160km, the eNB selecting, according to the timing advance, to use a timing advance Command (TAC) bit or a reserved bit together with the TAC bit in a random access response message, to carry the timing advance, and then issuing the random access response message carrying the timing advance to the UE; and
after receiving the random access response message, the UE judging whether the reserved bit is used, if so, determining the initial timing based on the timing advance carried by the reserved bit together with the TAC bit, and if not, determining the initial timing based on the timing advance carried by the TAC bit.

Alternatively, when the eNB covering radius required by the application scenario is greater than 160km, the eNB selecting, according to the timing advance, to use the TAC bit or the reserved bit together with the TAC bit in the random access response message, to carry the timing advance comprises:
the eNB judging whether the timing advance can be represented by a binary number of the TAC bit in the random access response message, if so, using the TAC bit to carry the timing advance,
and if not, the eNB judging whether the timing advance can be represented by a binary number which is one bit more than the TAC bit, if so, using the reserved bit together with the TAC bit in the random access response message to carry the timing advance, and if not, using the maximum value of the binary number which can be contained by the reserved bit together with the TAC bit as the carried timing advance.

Alternatively, the method further comprises:
when the eNB covering radius required by the application scenario is greater than 100km and less than or equal to 160km, the eNB judging whether the timing advance can be represented by a binary number of the TAC bit in the random access response message, if so, using the TAC bit to carry the timing advance, and if not, using the maximum value of the binary number which can be contained by the TAC bit as the carried timing advance.

Alternatively, the method further comprises:
when the eNB covering radius required by the application scenario is less than or equal to 100km, the eNB judging whether the timing advance is greater than 1282, if so, using 1282 as the timing advance carried by the TAC bit, and if not, using the TAC bit to carry the timing advance.

Alternatively, when the reserved bit together with the TAC bit in the random access response message are used to carry the timing advance, the reserved bit is used as the most significant bit of the binary number.

The embodiments of the present invention further provide a system for implementing Random Access Channel (RACH) synchronization, comprising: an evolved NodeB (eNB) and a User Equipment (UE), wherein,
the eNB is configured to: when a preamble sequence for random access is transmitted by the UE, calculate a timing advance for initial timing based on the preamble sequence, wherein the unit of the timing advance is 16Ts and Ts=[1/(15000×2048)] seconds; when an eNB covering radius required by the application scenario is greater than 160km, select, according to the timing advance, to use a timing advance Command (TAC) bit or a reserved bit together with the TAC bit in a random access response message to carry the timing advance, and then issue the random access response message carrying the timing advance to the UE; and
the UE is configured to transmit the preamble sequence for random access to the eNB; and after receiving the random access response message transmitted by the eNB, judge whether the reserved bit is used, if so, determine the initial timing based on the timing advance carried by the reserved bit together with the TAC bit, and if not, determine the initial timing based on the timing advance carried by the TAC bit.

Alternatively, the eNB comprises a first judgment execution module and a second judgment execution module, wherein,
the first judgment execution module is configured to judge whether the timing advance can be represented by a binary number of the TAC bit in the random access response message when the eNB covering radius required by the application scenario is greater than 160km, if so, use the TAC bit to carry the timing advance, and if not, invoke the second judgment execution module; and
the second judgment execution module is configured to judge whether the timing advance can be represented by a binary number which is one bit more than the TAC bit, if so, use the reserved bit together with the TAC bit in the random access response message to carry the timing advance, if not, use the maximum value of the binary number which can be contained by the reserved bit together with the TAC bit as the carried timing advance.

Alternatively, the eNB further comprises a third judgment execution module, wherein,
the third judgment execution module is configured to judge whether the timing advance can be represented by a binary number of the TAC bit in the random access response message when the eNB covering radius required by the application scenario is greater than 100km and less than or equal to 160km, if so, use the TAC bit to carry the timing advance, if not, use the maximum value of the binary number which can be contained by the TAC bit as the carried timing advance.

Alternatively, the eNB further comprises a fourth judgment execution module, wherein,
the fourth judgment execution module is configured to judge whether the timing advance is greater than 1282 when the eNB covering radius required by the application scenario is less than or equal to 100km, if so, use 1282 as the timing advance carried by the TAC bit, if not, use the TAC bit to carry the timing advance.

Alternatively, when the reserved bit together with the TAC bit in the random access response message are used to carry the timing advance, the reserved bit is used as the most significant bit of the binary number.

With the method and system for implementing RACH synchronization according to the embodiments of the present invention, the reserved bit in the random access response message is used, which is equivalent to expanding the TAC bit carrying the timing advance, and in a condition that the eNB covering range required by the application scenario is large, RACH synchronization can also be implemented. Meanwhile, when there is a mismatch between the measured timing advance and the eNB covering range required by the application scenario, the timing advance can further be corrected in the embodiments of the present invention, to ensure that RACH synchronization is implemented successfully.

### Brief Description of Drawings

Fig. 1 is a flowchart of a method for implementing RACH synchronization according to embodiment one of the present invention;
Fig. 2 is a structural diagram of a random access response message;
Fig. 3 is a diagram of composition of a system for implementing RACH synchronization according to embodiment two of the present invention;
Fig. 4 is a diagram of a process of the method for implementing RACH synchronization according to embodiment one of the present invention;
Fig. 5 is a flowchart of a method for implementing RACH synchronization according to embodiment two of the present invention; and
Fig. 6 is a flowchart of a method for implementing RACH synchronization according to embodiment three of the present invention.

### Preferred Embodiments of the Present Invention

The embodiments of the present invention will be described in detail below in conjunction with accompanying drawings. It should be illustrated that without a conflict, the embodiments in the present application and the features in the embodiments can be combined with each other randomly.

### Embodiment one

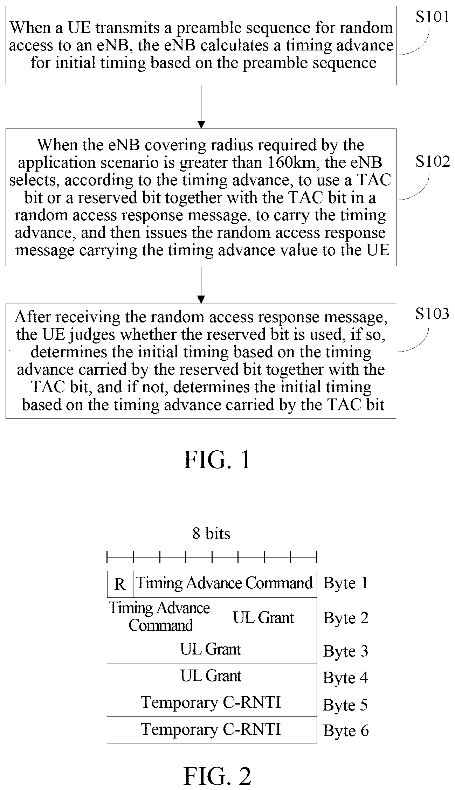

A method for implementing RACH synchronization according to embodiment one of the present invention, as shown in Fig. 1, comprises the following steps.

In step S101, when a UE transmits a preamble sequence for random access to an eNB, the eNB calculates a timing advance for initial timing based on the preamble sequence, wherein the unit of the timing advance value is 16Ts.

As the RACH synchronization is an uplink synchronization process, and the purpose of transmitting a preamble sequence by the UE is to randomly access to the eNB. The eNB correlates the received preamble sequence with a local transmission sequence, to acquire a detection peak, and a deviation between the detection peak and an ideal peak position without a time offset is a timing advance. This content is well-known technology in the prior art, and thus will not be described in detail here.

In step S102, when the eNB covering radius required by the application scenario is greater than 160km, the eNB selects, according to the timing advance, to use a TAC bit or a reserved bit together with the TAC bit in a random access response message, to carry the timing advance, and then issues the random access response message carrying the timing advance value to the UE.

The structure of the random access response message is shown in Fig. 2. In the related art, a reserved bit R in the random access response message is a reserved bit, and the TAC bit is composed of 11 bits in total, which are 7 bits of a first byte and 4 bits of a second byte in the random access response message. When the timing advance value is carried, in an order from the left to the right and from the first byte to the second byte, there are the most significant bit to the least significant bit of the binary timing advance value in turn. When the reserved bit together with the TAC bit in the random access response message are used to carry the timing advance, there is a binary number up to 12 bits. The reserved bit can theoretically be used as any bit of the binary number, but in practice, it needs to consider the cooperation of the software and hardware and the implementation complexity of interaction between devices. Therefore, the most preferable scheme is to use the reserved bit as the most significant bit of the carried binary timing advance value.

When the eNB covering radius required by the application scenario is greater than 160km, the eNB judges whether the timing advance can be represented by a binary number of the TAC bit in the random access response message, and if so, uses the TAC bit to carry the timing advance;
and if not, the eNB judges whether the timing advance value can be represented by a binary number which is one bit more than the TAC bit, if so, uses the reserved bit together with the TAC bit in the random access response message to carry the timing advance, and if not, uses the maximum value of the binary number which can be contained by the reserved bit together with the TAC bit as the carried timing advance, i.e. replacing the timing advance with the maximum value of the binary number which is one bit more than the TAC bit, and uses the reserved bit together with the TAC bit to carry the timing advance.

When the timing advance value is the maximum value of the binary number which can be contained by the reserved bit together with the TAC bit, i.e. 4095, it is an upper limit of the timing advance which can be carried by the random access response message. If the measured timing advance is greater than 4095, it cannot be represented by using the reserved bit together with the TAC bit. Therefore, it needs to limit the timing advance to 4095 to achieve RACH synchronization.

In addition, according to different sizes of eNB covering ranges required by application scenarios, the following two conditions are further comprised.

In a first condition, when the eNB covering radius required by the application scenario is greater than 100km and less than or equal to 160km, the eNB judges whether the timing advance can be represented by the binary number of the TAC bit in the random access response message, if so, uses the TAC bit to carry the timing advance, and if not, uses the maximum value of the binary number which can be contained by the TAC bit as the carried timing advance, i.e. replacing the timing advance with the maximum value of the binary number which can be contained by the TAC, and uses the TAC bit to carry the timing advance.

When the timing advance is the maximum value of the binary number which can be contained by the TAC bit, i.e. 2047, the eNB covering radius in the corresponding application scenario is 160km. If the eNB100 covering radius required by the application scenario is less than or equal to 160km, and the measured timing advance is greater than 2047, there is a mismatch. Therefore, it needs to limit the timing advance to 2047 to achieve RACH synchronization.

In a second condition, when the eNB covering radius required by the application scenario is less than or equal to 100km, the eNB judges whether the timing advance is greater than 1282, if so, uses 1282 as the timing advance carried by the TAC bit, i.e., replacing the timing advance with 1282, and uses the TAC bit to carry the timing advance, and if not, uses the TAC bit to carry the timing advance.

When the timing advance value is 1282, the eNB covering radius in the corresponding application scenario is 100km. If the eNB100 covering radius required by the application scenario is less than or equal to 100km, and the measured timing advance is greater than 1282, there is a mismatch. Therefore, it needs to limit timing advance to 1282, to achieve RACH synchronization.

In step S103, after receiving the random access response message, the UE judges whether the reserved bit is used, if so, determines the initial timing based on the timing advance carried by the reserved bit together with the TAC bit, and if not, determines the initial timing based on the timing advance value carried by the TAC bit. The determination of the initial timing based on the timing advance is well-known technology in the prior art, and thus will not be described in detail here.

### Embodiment two

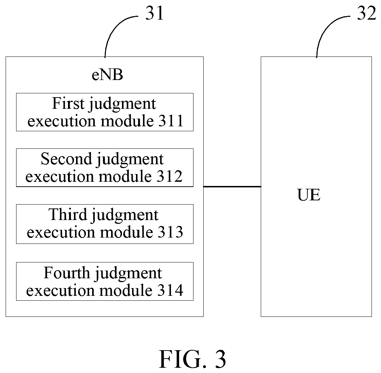

A system for implementing RACH synchronization according to embodiment two of the present invention, as shown in Fig. 3, comprises the following constitutions, i.e., an eNB31 and a UE32.

The eNB31 is configured to: when the UE32 transmits a preamble sequence for random access, calculate a timing advance for initial timing based on the preamble sequence, wherein the unit of the timing advance is 16Ts; and when an eNB31 covering radius required by the application scenario is greater than 160km, select, according to the timing advance, to use a TAC bit or a reserved bit together with the TAC bit in a random access response message, to carry the timing advance, and then issue the random access response message carrying the timing advance to the UE32.

The eNB31 correlates the received preamble sequence with the local transmission sequence, to acquire a detection peak, and a deviation between the detection peak and an ideal peak position without a time offset is the timing advance. This content is well-known technology in the prior art, and thus will not be described in detail here.

The eNB31 comprises:
a first judgment execution module 311, configured to judge whether the timing advance can be represented by the binary number of the TAC bit in the random access response message when an eNB31 covering radius required by the application scenario is greater than 160km, if so, use the TAC bit to carry the timing advance, and if not, invoke a second judgment execution module 312; and
the second judgment execution module 312, configured to judge whether the timing advance can be represented by a binary number which is one bit more than the TAC bit, if so, use the reserved bit together with the TAC bit in the random access response message to carry the timing advance, and if not, use the maximum value of the binary number which can be contained by the reserved bit together with the TAC bit as the carried timing advance.

When the reserved bit together with the TAC bit in the random access response message are used to carry a binary number of the timing advance, there is a binary number up to 12 bits. The reserved bit can theoretically be used as any bit of the binary number, but in practice, it needs to consider the cooperation of the software and hardware and the implementation complexity between devices. Therefore, the most preferable scheme is to use the reserved bit as the most significant bit of the carried binary timing advance value.

The UE32 is configured to transmit the preamble sequence for random access to eNB31; after receiving the random access response message transmitted by the eNB31, judge whether the reserved bit is used, if so, determine the initial timing based on the timing advance carried by the reserved bit together with the TAC bit, and if not, determine the initial timing based on the timing advance carried by the TAC bit.

In addition, according to different sizes of eNB31 covering ranges required by application scenarios, the functions completed by eNB31 using various judgment execution modules therein further comprise the following two conditions.

In a first condition, when the eNB31 covering radius required by the application scenario is greater than 100km and less than or equal to 160km, eNB31 further comprises:
a third judgment execution module 313, configured to judge whether the timing advance can be represented by the binary number of the TAC bit in the random access response message when the eNB31 covering radius required by the application scenario is greater than 100km and less than or equal to 160km, if so, use the TAC bit to carry the timing advance, and if not, use the maximum value of the binary number which can be contained by the TAC bit as the carried timing advance.

In a second condition, when the eNB31 covering radius required by the application scenario is less than or equal to 100km, eNB31 further comprises:
a fourth judgment execution module 314, configured to judge whether the timing advance is greater than 1282 when the eNB31 covering radius required by the application scenario is less than or equal to 100km, if so, use 1282 as the timing advance carried by the TAC bit, and if not, use the TAC bit to carry the timing advance.

Based on the above embodiments, three application examples of the present invention will be described.

### Application example one

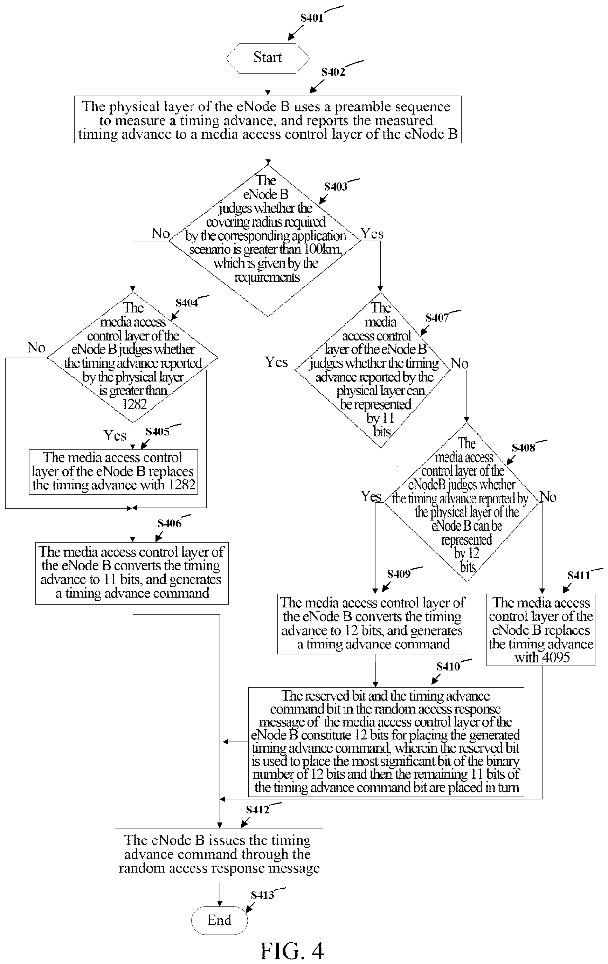

As shown in Fig. 4, by taking an LTE system as an example, the method for implementing RACH synchronization comprises the following steps.

In step S401, the process starts.

In step S402, a physical layer of the eNode B uses a preamble sequence to measure a timing advance, reports the measured timing advance to a media access control layer of the eNode B, and executes the step S403; wherein the unit of the timing advance is 16Ts.

In step S403, the eNode B judges whether the covering radius required by the corresponding application scenario is greater than 100km, which is given by the requirements, if so, executes step S407, and if not, executes step S404.

In step S404, the media access control layer of the eNode B judges whether the received timing advance is greater than 1282, if so, executes step S405, and if not, executes step S406.

In step S405, the media access control layer of the eNode B replaces the timing advance with 1282, and executes S406.

In step S406, the media access control layer of the eNode B converts the timing advance to a binary number of 11 bits, generates a timing advance command, and execute step S412.

In step S407, the media access control layer of the eNode B judges whether the timing advance reported by the physical layer of the eNode B can be represented by 11 bits, if so, executes step S406; and if not, executes step S408. This step is to judge whether the timing advance command bit (totally 11 bits) in the random access response message can contain the binary number of the measured timing advance.

In step S408, the media access control layer of the eNode B judges whether the timing advance reported by the physical layer of the eNode B can be represented by 12 bits, if so, executes step S409, if not, executes step S411. This step is to judge whether the reserved bit together with the timing advance command bit (totally 12 bits) in the random access response message can contain the binary number of the measured timing advance.

In step S409, the media access control layer of the eNode B converts the timing advance to 12 bits, generates a timing advance command, and executes step S410.

In step S410, the reserved bit and the timing advance command bit in the random access response message of the media access control layer of the eNode B constitute 12 bits for placing the generated timing advance command, wherein the reserved bit is used to place the most significant bit of the binary number of 12 bits and then the remaining 11 bits of the timing advance command bit are placed in turn, and executes step S412.

In step S411, the media access control layer of the eNode B replaces the timing advance with 4095, and executes step S412.

In step S412, the eNode B issues the timing advance command through the random access response message, and executes step S413.

In step S413, the process ends.

Corresponding to the above steps, it needs to design a UE with the following functions:
When the UE receives the random access response message transmitted by the eNB, with reference to Fig. 2, the reserved bit R and the TAC bit, which are 12 bits in total, can be parsed in association, wherein the reserved bit R is the most significant bit, followed by 11 bits of the TAC bits, and each bit is lower than a previous bit in turn.

For example, for a normal terminal, after the reserved bit R which is 0, together with a binary number of 11 bits of the TAC bit are converted into a decimal number, it is less than or equal to 1282. For an operation condition that the covering radius is greater than 100km, the terminal can parse the reserved bit R which is 0, and convert the reserved bit together with the binary number of 11 bits of the TAC bit to a decimal number, which is greater than 1282, and the terminal can also parse the reserved bit R which is 1, and convert the reserved bit together with the binary number of 11 bits of the TAC bit to a decimal number, which is greater than 2047.

### Application example two

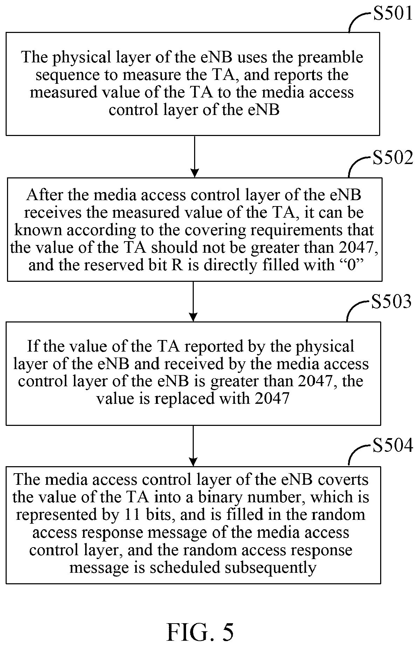

For a scenario of covering domestic routes, it is a scenario that the covering radius is required to be greater than 100km, but the largest radius is limited to 160km. As shown in Fig. 5, the method for implementing RACH synchronization comprises the following steps.

In step S501, the physical layer of the eNB uses the preamble sequence to measure the TA, and reports the measured value of the TA to the media access control layer of the eNB.

In step S502, after the media access control layer of the eNB receives the measured value of the TA, it can be known according to the current covering requirements that the value of the TA should not be greater than 2047, and therefore, it can be determined that the reserved bit R of the random access response message of the media access control layer can be directly filled with "0".

In step S503, if the value of the TA reported by the physical layer of the eNB and received by the media access control layer of the eNB is greater than 2047, it is replaced with 2047; and the process proceeds to step S504.

In step S504, the media access control layer of the eNB coverts the value of the TA into a binary number, which is represented by 11 bits, and is filled in the random access response message of the media access control layer, and the random access response message is scheduled subsequently.

### Application example three

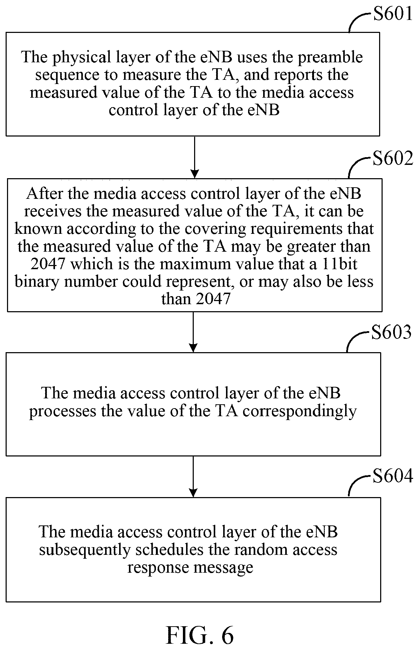

For a scenario of covering international routes, it is a scenario that the covering radius is required to be greater than 160km. As shown in Fig. 6, the method for implementing RACH synchronization comprises the following steps.

In step S601, the physical layer of the eNB uses the preamble sequence to measure the TA, and reports the measured value of the TA to the media access control layer of the eNB.

In step S602, after the media access control layer of the eNB receives the measured value of the TA, it can be known according to the current covering requirements that the measured value of the TA may be greater than 2047 which is the maximum value represented by a binary number of 11 bits, or it may also be less than 2047, and therefore it should be processed according to the conditions.

In step S603, if the measured value of the TA received by the media access control layer of the eNB is less than 2047, the media access control layer of the eNB converts the measured value of the TA to a binary number of 11 bits, and the reserved bit R of the media access control layer is filled with "0" directly; if the measured value of the TA received by the media access control layer of the eNB is greater than 2047 but less than 4095, the media access control layer of the eNB converts the measured value of the TA to a binary number of 12 bits, and uses the reserved bit R and the TAC bit which are totally 12 bits of the media access control layer for carry; and if the measured value of the TA received by the media access control layer of the eNB is greater than 4095, at this time, the media access control layer of the eNB needs to replace the measured value of the TA with 4095, and uses the reserved bit R and the TAC bit which are totally 12 bits of the random access response message of the media access control layer for carry.

In step S604, the media access control layer of the eNB subsequently schedules the random access response message.

With the design of the method and terminal for implementing RACH synchronization in a large covering scenario according to the embodiments of the present invention, the MAC layer of the eNB calculates the TAC according to the value of the TA measured by the physical layer of the eNB, and in the process of calculating the TAC, combines the reserved bit R and the TAC bit which are totally 12 bits to place the TAC, wherein the reserved bit R is the most significant bit of the TAC, which is followed by 11 bits of the TAC bit in an descending order of priorities. Similarly, the terminal supporting the function is also required to not only apply in a scenario where the covering radius is less or equal to 100km, but also support a covering scenario greater than 100km, for example, the airline covering scenario.

With the method and system for implementing RACH synchronization according to the embodiments of the present invention, the reserved bit in the random access response message is used, which is equivalent to expanding the TAC bit carrying the timing advance, and in a condition that the eNB covering range required by the application scenario is large, RACH synchronization can also be implemented. Meanwhile, when there is a mismatch between the measured timing advance and the eNB covering range required by the application scenario, the timing advance can further be corrected in the embodiments of the present invention, to ensure that RACH synchronization is implemented successfully.

A person having ordinary skill in the art should understand that all or a part of the steps in the above method can be implemented by programs instructing related hardware, and the programs can be stored in a computer readable storage medium, such as a read-only memory, a disk, or a disc etc. Alternatively, all or a part of the steps in the aforementioned embodiments can also be implemented with one or more integrated circuits. Accordingly, various modules/units in the aforementioned embodiments can be implemented in a form of hardware, or can also be implemented in a form of software functional modules. The embodiments of the present invention are not limited to any particular form of combination of hardware and software.

With the description of the implementations, the technical measures used by the present invention to achieve the predetermined purposes and the technical effects can be more thoroughly understood. However, the illustrated accompanying drawings are only used for providing references and description, instead of limiting the present invention. For those skilled in the art, the embodiments of the present invention may have various changes and variations. Any amendment, equivalent substitution, improvement etc. made within the spirit and principle of the present invention should be covered in the protection scope of the present invention.

### Industrial Applicability

With the method and system according to the embodiments of the present invention, in a condition that the eNB covering range required by the application scenario is large, RACH synchronization can also be implemented; and the timing advance can be corrected, to ensure that RACH synchronization is implemented successfully.

## Claims

1. A method for implementing Random Access Channel (RACH) synchronization, comprising:
after a User Equipment (UE) transmits a preamble sequence for random access to an evolved NodeB (eNB), the eNB calculating a timing advance for initial timing based on the preamble sequence, wherein a unit of the timing advance is 16Ts, where Ts=[1/(15000×2048)] seconds;
when an eNB covering radius required by an application scenario is greater than 160km, the eNB selecting, according to the timing advance, to use a timing advance Command (TAC) bit or a reserved bit together with the TAC bit in a random access response message, to carry the timing advance, and then issuing the random access response message carrying the timing advance to the UE; and
after receiving the random access response message, the UE judging whether the reserved bit is used, if so, determining the initial timing based on the timing advance carried by the reserved bit together with the TAC bit, and if not, determining the initial timing based on the timing advance carried by the TAC bit; **characterised in that** when the eNB covering radius required by the application scenario is greater than 160km, the eNB selecting, according to the timing advance, to use the TAC bit or the reserved bit together with the TAC bit in the random access response message, to carry the timing advance comprises:
the eNB judging whether the timing advance can be represented by a binary number of the TAC bit in the random access response message, if so, using the TAC bit to carry the timing advance, and if not, the eNB judging whether the timing advance can be represented by a binary number with one more bit than the TAC bit, if so, using the reserved bit together with the TAC bit in the random access response message to carry the timing advance, and if not, using a maximum value of the binary number which can be contained by the reserved bit together with the TAC bit as the carried timing advance;
when the eNB covering radius required by the application scenario is greater than 100km and less than or equal to 160km, the eNB judging whether the timing advance can be represented by a binary number of the TAC bit in the random access response message, if so, using the TAC bit to carry the timing advance, and if not, using the maximum value of the binary number which can be contained by the TAC bit as the carried timing advance;
when the eNB covering radius required by the application scenario is less than or equal to 100km, the eNB judging whether the timing advance is greater than 1282, if so, using 1282 as the timing advance carried by the TAC bit, and if not, using the TAC bit to carry the timing advance.

2. The method according to claim 1, wherein, when the reserved bit together with the TAC bit in the random access response message are used to carry the timing advance, the reserved bit is used as a most significant bit of the binary number.

3. A system for implementing Random Access Channel (RACH) synchronization, comprising: an evolved NodeB (eNB) and a User Equipment (UE), wherein,
the eNB is configured to: after a preamble sequence for random access is transmitted by the UE, calculate a timing advance for initial timing based on the preamble sequence, wherein a unit of the timing advance is 16Ts where Ts=[1/(15000×2048)] seconds; when an eNB covering radius required by an application scenario is greater than 160km, select, according to the timing advance, to use a timing advance Command (TAC) bit or a reserved bit together with the TAC bit in a random access response message to carry the timing advance, and then issue the random access response message carrying the timing advance to the UE; and
the UE is configured to transmit the preamble sequence for random access to the eNB; and after receiving the random access response message transmitted by the eNB, judge whether the reserved bit is used, if so, determine the initial timing based on the timing advance carried by the reserved bit together with the TAC bit, and if not, determine the initial timing based on the timing advance carried by the TAC bit; **characterised in that** the eNB comprises a first judgment execution module and a second judgment execution module, wherein,
the first judgment execution module is configured to judge whether the timing advance can be represented by a binary number of the TAC bit in the random access response message when the eNB covering radius required by the application scenario is greater than 160km, if so, use the TAC bit to carry the timing advance, and if not, invoke the second judgment execution module; and
the second judgment execution module is configured to judge whether the timing advance can be represented by a binary number with one more bit than the TAC bit, if so, use the reserved bit together with the TAC bit in the random access response message to carry the timing advance, if not, use a maximum value of the binary number which can be contained by the reserved bit together with the TAC bit as the carried timing advance;
the eNB further comprises a third judgment execution module, wherein,
the third judgment execution module is configured to judge whether the timing advance can be represented by a binary number of the TAC bit in the random access response message when the eNB covering radius required by the application scenario is greater than 100km and less than or equal to 160km, if so, use the TAC bit to carry the timing advance, if not, use the maximum value of the binary number which can be contained by the TAC bit as the carried timing advance;
the eNB further comprises a fourth judgment execution module, wherein,
the fourth judgment execution module is configured to judge whether the timing advance is greater than 1282 when the eNB covering radius required by the application scenario is less than or equal to 100km, if so, use 1282 as the timing advance carried by the TAC bit, if not, use the TAC bit to carry the timing advance.

4. The system according to claim 3, wherein,
when the reserved bit together with the TAC bit in the random access response message are used to carry the timing advance, the reserved bit is used as a most significant bit of the binary number.

## Patentansprüche

1. Verfahren zur Implementierung von Direktzugriffskanalsynchronismus (RACH-Synchronismus, Random Access Channel), wobei das Verfahren umfasst:
nachdem eine Teilnehmereinrichtung (User Equipment, UE) eine Präambelsequenz für einen Direktzugriff an einen entwickelten NodeB (evolved NodeB, eNB) übertragen hat, Berechnen, durch den eNB, einer Vorlaufzeit (Timing Advance) für eine ursprüngliche Laufzeit basierend auf der Präambelsequenz, wobei eine Einheit der Vorlaufzeit 16Ts beträgt, wobei Ts = [1/(15000 × 2048)] Sekunden;
wenn ein für ein Anwendungsszenario erforderlicher eNB-Abdeckungsradius größer als 160 km ist, Auswählen, durch den eNB, gemäß der Vorlaufzeit, ein Vorlaufzeitbefehl (Timing Advance Command, TAC) -Bit oder ein reserviertes Bit gemeinsam mit dem TAC-Bit in einer Direktzugriffsantwortmitteilung zu verwenden, um die Vorlaufzeit zu transportieren, und anschließend Ausgeben der Direktzugriffsantwortmitteilung, welche die Vorlaufzeit transportiert, an die UE; und
nach dem Empfang der Direktzugriffsantwortmitteilung, Beurteilen, durch die UE, ob das reservierte Bit verwendet worden ist, und wenn dies der Fall ist, Bestimmen der ursprünglichen Laufzeit basierend auf der Vorlaufzeit, die von dem reservierten Bit gemeinsam mit dem TAC-Bit transportiert wurde, und wenn dies nicht der Fall ist, Bestimmen der ursprünglichen Laufzeit basierend auf der Vorlaufzeit, die von dem TAC-Bit transportiert wurde;
**dadurch gekennzeichnet, dass**
wenn der für das Anwendungsszenario erforderliche eNB-Abdeckungsradius größer als 160 km ist, das Auswählen, durch den eNB, gemäß der Vorlaufzeit, das TAC-Bit oder das reservierte Bit gemeinsam mit dem TAC-Bit in der Direktzugriffsantwortmitteilung zu verwenden, um die Vorlaufzeit zu transportieren, umfasst:
Beurteilen, durch den eNB, ob die Vorlaufzeit durch eine binäre Zahl des TAC-Bits in der Direktzugriffsantwortmitteilung repräsentiert werden kann, und wenn dies der Fall ist, Verwenden des TAC-Bits, um die Vorlaufzeit zu transportieren, und wenn dies nicht der Fall ist, Beurteilen, durch den eNB, ob die Vorlaufzeit durch eine binäre Zahl mit einer Stelle mehr als das TAC-Bit repräsentiert werden kann, und wenn dies der Fall ist, Verwenden des reservierten Bits gemeinsam mit dem TAC-Bit in der Direktzugriffsantwortmitteilung, um die Vorlaufzeit zu transportieren, und wenn dies nicht der Fall ist, Verwenden eines maximalen Werts der binären Zahl, die in dem reservierten Bit gemeinsam mit dem TAC-Bit enthalten sein kann, als die transportierte Vorlaufzeit;
wenn der für das Anwendungsszenario erforderliche eNB-Abdeckungsradius größer als 100 km und kleiner oder gleich 160 km ist, Beurteilen, durch den eNB, ob die Vorlaufzeit durch eine binäre Zahl des TAC-Bits in der Direktzugriffsantwortmitteilung repräsentiert werden kann, und wenn dies der Fall ist, Verwenden des TAC-Bits, um die Vorlaufzeit zu transportieren, und wenn dies nicht der Fall ist, Verwenden des maximalen Werts der binären Zahl, die in dem TAC-Bit enthalten sein kann, als die transportierte Vorlaufzeit;
wenn der für das Anwendungsszenario erforderliche eNB-Abdeckungsradius kleiner oder gleich 100 km ist, Beurteilen, durch den eNB, ob die Vorlaufzeit größer als 1282 ist, und wenn dies der Fall ist, Verwenden von 1282 als die von dem TAC-Bit transportierte Vorlaufzeit, und wenn dies nicht der Fall ist, Verwenden des TAC-Bits, um die Vorlaufzeit zu transportieren.

2. Verfahren gemäß Anspruch 1, wobei,
wenn das reservierte Bit gemeinsam mit dem TAC-Bit in der Direktzugriffsantwortmitteilung verwendet wird, um die Vorlaufzeit zu transportieren, das reservierte Bit als das signifikanteste Bit der binären Zahl verwendet wird.

3. System zur Implementierung von Direktzugriffskanalsynchronismus (RACH-Synchronismus, Random Access Channel), wobei das System umfasst: einen entwickelten NodeB (evolved NodeB, eNB) und eine Teilnehmereinrichtung (User Equipment, UE), wobei,
der eNB konfiguriert ist zum: nachdem eine Präambelsequenz für einen Direktzugriff von der UE übertragen worden ist, Berechnen einer Vorlaufzeit für eine ursprüngliche Laufzeit basierend auf der Präambelsequenz, wobei eine Einheit der Vorlaufzeit 16Ts beträgt, wobei Ts = [1/(15000 × 2048)] Sekunden; wenn ein für ein Anwendungsszenario erforderlicher eNB-Abdeckungsradius größer als 160 km ist, Auswählen, gemäß der Vorlaufzeit, ein Vorlaufzeitbefehl (Timing Advance Command, TAC) -Bit oder ein reserviertes Bit gemeinsam mit dem TAC-Bit in einer Direktzugriffsantwortmitteilung zu verwenden, um die Vorlaufzeit zu transportieren, und anschließend Ausgeben der Direktzugriffsantwortmitteilung, welche die Vorlaufzeit transportiert, an die UE; und
wobei die UE dazu konfiguriert ist, die Präambelsequenz für den Direktzugriff an den eNB zu übertragen; und nach dem Empfang der übertragenen, von dem eNB stammenden Direktzugriffsantwortmitteilung, Beurteilen, ob das reservierte Bit verwendet worden ist, und wenn dies der Fall ist, Bestimmen der ursprünglichen Laufzeit basierend auf der Vorlaufzeit, die von dem reservierten Bit gemeinsam mit dem TAC-Bit transportiert wurde, und wenn dies nicht der Fall ist, Bestimmen der ursprünglichen Laufzeit basierend auf der Vorlaufzeit, die von dem TAC-Bit transportiert wurde;
**dadurch gekennzeichnet, dass**
der eNB ein erstes Beurteilungsausführungsmodul und ein zweites Beurteilungsausführungsmodul umfasst, wobei
das erste Beurteilungsausführungsmodul konfiguriert ist zum Beurteilen, ob die Vorlaufzeit durch eine binäre Zahl des TAC-Bits in der Direktzugriffsantwortmitteilung repräsentiert werden kann, wenn der für das Anwendungsszenario erforderliche eNB-Abdeckungsradius größer als 160 km ist, und wenn dies der Fall ist, Verwenden des TAC-Bits, um die Vorlaufzeit zu transportieren, und wenn dies nicht der Fall ist, Aktivieren des zweiten Beurteilungsausführungsmoduls; und
das zweite Beurteilungsausführungsmodul konfiguriert ist zum Beurteilen, ob die Vorlaufzeit durch eine binäre Zahl mit einer Stelle mehr als das TAC-Bit repräsentiert werden kann, und wenn dies der Fall ist, Verwenden des reservierten Bits gemeinsam mit dem TAC-Bit in der Direktzugriffsantwortmitteilung, um die Vorlaufzeit zu transportieren, und wenn dies nicht der Fall ist, Verwenden eines maximalen Werts der binären Zahl, die in dem reservierten Bit gemeinsam mit dem TAC-Bit enthalten sein kann, als die transportierte Vorlaufzeit;
wobei der eNB weiterhin ein drittes Beurteilungsausführungsmodul umfasst, wobei das dritte Beurteilungsausführungsmodul konfiguriert ist zum Beurteilen, ob die Vorlaufzeit durch eine binäre Zahl des TAC-Bits in der Direktzugriffsantwortmitteilung repräsentiert werden kann, wenn der für das Anwendungsszenario erforderliche eNB-Abdeckungsradius größer als 100 km und kleiner oder gleich 160 km ist, und wenn dies der Fall ist, Verwenden des TAC-Bits, um die Vorlaufzeit zu transportieren, und wenn dies nicht der Fall ist, Verwenden des maximalen Werts der binären Zahl, die in dem TAC-Bit enthalten sein kann, als die transportierte Vorlaufzeit; wobei der eNB weiterhin ein viertes Beurteilungsausführungsmodul umfasst, wobei das vierte Beurteilungsausführungsmodul konfiguriert ist zum Beurteilen, ob die Vorlaufzeit größer als 1282 ist, wenn der für das Anwendungsszenario erforderliche eNB-Abdeckungsradius kleiner oder gleich 100 km ist, und wenn dies der Fall ist, Verwenden von 1282 als die von dem TAC-Bit transportierte Vorlaufzeit, und wenn dies nicht der Fall ist, Verwenden des TAC-Bits, um die Vorlaufzeit zu transportieren.

4. System gemäß Anspruch 3, wobei,
wenn das reservierte Bit gemeinsam mit dem TAC-Bit in der Direktzugriffsantwortmitteilung verwendet wird, um die Vorlaufzeit zu transportieren, das reservierte Bit als das signifikanteste Bit der binären Zahl verwendet wird.

## Revendications

1. Procédé de mise en oeuvre d'une synchronisation RACH (Random Access Channel), comprenant les opérations suivantes :
après qu'un équipement utilisateur (EU) a envoyé une séquence de préambule pour un accès aléatoire à un noeud B évolué (eNB ; evolved NodeB), l'eNB calcule une avance temporelle pour un positionnement temporel initial compte tenu de la séquence de préambule, l'unité de l'avance temporelle étant de 16 Ts, où Ts = [11(15000 × 2048)] secondes ;
quand le rayon de couverture de l'eNB requis par le scénario d'application est supérieur à 160 km, l'eNB choisit, en fonction de l'avance temporelle, d'utiliser un bit de commande d'avance temporelle (TAC ; timing advance command) ou un bit réservé conjointement au bit de TAC d'un message de réponse d'accès aléatoire, pour véhiculer l'avance temporelle, puis délivre le message de réponse d'accès aléatoire véhiculant l'avance temporelle auprès de l'EU ; et
après avoir reçu le message de réponse d'accès aléatoire, l'EU détermine si le bit réservé est utilisé, et si c'est le cas, il détermine le positionnement temporel initial compte tenu de l'avance temporelle véhiculée par le bit réservé conjointement au bit de TAC, et si ce n'est pas le cas, il détermine le positionnement temporel initial compte tenu de l'avance temporelle véhiculée par le bit de TAC ;
**caractérisé en ce que**
quand le rayon de couverture de l'eNB requis par le scénario d'application est supérieur à 160 km, le choix, par l'eNB, en fonction de l'avance temporelle, d'utiliser le bit de TAC ou le bit réservé conjointement au bit de TAC du message de réponse d'accès aléatoire pour véhiculer l'avance temporelle comprend les opérations suivantes :
l'eNB détermine si l'avance temporelle peut être représentée par un nombre binaire du bit de TAC du message de réponse d'accès aléatoire, et si c'est le cas, il utilise le bit de TAC pour véhiculer l'avance temporelle, et si ce n'est pas le cas, l'eNB détermine si l'avance temporelle peut être représentée par un nombre binaire comportant un bit de plus que le bit de TAC, et si c'est le cas, il utilise le bit réservé conjointement au bit de TAC du message de réponse d'accès aléatoire pour véhiculer l'avance temporelle, et si ce n'est pas le cas, il utilise la valeur maximale du nombre binaire susceptible d'être contenue par le bit réservé conjointement au bit de TAC en tant qu'avance temporelle véhiculée ;
quand le rayon de couverture de l'eNB requis par le scénario d'application est supérieur à 100 km et inférieur ou égal à 160 km, l'eNB détermine si l'avance temporelle peut être représentée par un nombre binaire du bit de TAC du message de réponse d'accès aléatoire, et si c'est le cas, il utilise le bit de TAC pour véhiculer l'avance temporelle, et si ce n'est pas le cas, il utilise la valeur maximale du nombre binaire susceptible d'être contenue par le bit de TAC en tant qu'avance temporelle véhiculée ;
quand le rayon de couverture de l'eNB requis par le scénario d'application est inférieur ou égal à 100 km, l'eNB détermine si l'avance temporelle est supérieure à 1282, et si c'est le cas, il utilise 1282 en tant qu'avance temporelle véhiculée par le bit de TAC, et si ce n'est pas le cas, il utilise le bit de TAC pour véhiculer l'avance temporelle.

2. Procédé selon la revendication 1, dans lequel,
quand le bit réservé conjointement au bit de TAC du message de réponse d'accès aléatoire sont utilisés pour véhiculer l'avance temporelle, le bit réservé sert de bit le plus significatif du nombre binaire.

3. Système de mise en oeuvre d'une synchronisation RACH (Random Access Channel), comprenant : un noeud B évolué (eNB ; evolved NodeB) et un équipement utilisateur (EU), dans lequel
l'eNB est configuré pour : après que l'EU a envoyé une séquence de préambule pour un accès aléatoire, calculer une avance temporelle pour un positionnement temporel initial compte tenu de la séquence de préambule, l'unité de l'avance temporelle étant de 16 Ts où Ts = [11(15000 × 2048)] secondes ; quand le rayon de couverture de l'eNB requis par un scénario d'application est supérieur à 160 km, choisir, en fonction de l'avance temporelle, d'utiliser un bit de commande d'avance temporelle (TAC ; timing advance command) ou un bit réservé conjointement au bit de TAC d'un message de réponse d'accès aléatoire pour véhiculer l'avance temporelle, puis délivrer le message de réponse d'accès aléatoire véhiculant l'avance temporelle auprès de l'EU ; et
l'EU est configuré pour envoyer la séquence de préambule pour un accès aléatoire à l'eNB ; et après avoir reçu le message de réponse d'accès aléatoire envoyé par l'eNB, pour déterminer si le bit réservé est utilisé, et si c'est le cas, pour déterminer le positionnement temporel initial compte tenu de l'avance temporelle véhiculée par le bit réservé conjointement au bit de TAC, et si ce n'est pas le cas, déterminer le positionnement temporel initial compte tenu de l'avance temporelle véhiculée par le bit de TAC ;
**caractérisé en ce que**
l'eNB comprend un premier module d'exécution de détermination et un deuxième module d'exécution de détermination,
ledit premier module d'exécution de détermination étant configuré pour déterminer si l'avance temporelle peut être représentée par un nombre binaire du bit de TAC du message de réponse d'accès aléatoire quand le rayon de couverture de l'eNB requis par le scénario d'application est supérieur à 160 km, et si c'est le cas, pour utiliser le bit de TAC pour véhiculer l'avance temporelle, et si ce n'est pas le cas, faire appel au deuxième module d'exécution de détermination ; et
ledit deuxième module d'exécution de détermination étant configuré pour déterminer si l'avance temporelle peut être représentée par un nombre binaire comportant un bit de plus que le bit de TAC, et si c'est le cas, pour utiliser le bit réservé conjointement au bit de TAC du message de réponse d'accès aléatoire pour véhiculer l'avance temporelle, sinon, pour utiliser la valeur maximale du nombre binaire susceptible d'être contenue par le bit réservé conjointement au bit de TAC en tant qu'avance temporelle véhiculée ;
l'eNB comprenant en outre un troisième module d'exécution de détermination,
ledit troisième module d'exécution de détermination étant configuré pour déterminer si l'avance temporelle peut être représentée par un nombre binaire du bit de TAC du message de réponse d'accès aléatoire quand le rayon de couverture de l'eNB requis par le scénario d'application est supérieur à 100 km et inférieur ou égal à 160 km, et si c'est le cas, pour utiliser le bit de TAC pour véhiculer l'avance temporelle, sinon, pour utiliser la valeur maximale du nombre binaire susceptible d'être contenue par le bit de TAC en tant qu'avance temporelle véhiculée ;
l'eNB comprenant en outre un quatrième module d'exécution de détermination,
ledit quatrième module d'exécution de détermination étant configuré pour déterminer si l'avance temporelle est supérieure à 1282 quand le rayon de couverture de l'eNB requis par le scénario d'application est inférieur ou égal à 100 km, et si c'est le cas, pour utiliser 1282 en tant qu'avance temporelle véhiculée par le bit de TAC, sinon, pour utiliser le bit de TAC pour véhiculer l'avance temporelle.

4. Système selon la revendication 3, dans lequel,
quand le bit réservé conjointement au bit de TAC du message de réponse d'accès aléatoire sont utilisés pour véhiculer l'avance temporelle, le bit réservé sert de bit le plus significatif du nombre binaire.
